# EUROPÄISCHE PATENTANMELDUNG

(11) **EP 1 170 314 A1**
(43) Veröffentlichungstag der Anmeldung: **09.01.2002**
(21) Anmeldenummer: 01114282.5
(22) Anmeldetag: 13.06.2001
(51) Int. Cl.: C08G 18/12, C08G 18/48

(54) **Polyisocyanat-Polyadditionsprodukte auf Basis von niedrig ungesättigten Polyolen**

(30) Priorität: 06.07.2000 DE 10032957
(71) Anmelder: BASF AKTIENGESELLSCHAFT, 67056 Ludwigshafen (DE)
(72) Erfinder: Kreyenschmidt, Martin, Dr., 49393 Lohne (DE)

(57) **Zusammenfassung**

Die Erfindung betrifft Polyisocyanat-Polyadditionsprodukte, erhältlich durch Umsetzung von
a) Isocyanat-Prepolymeren,
b) höhermolekularen Verbindung mit mindestens zwei gegenüber Isocyanatgruppen reaktiven Wasserstoffatomen,
c) mindestens einem Kettenverlängerungsmittel (I),
d) gegebenenfalls Treibmittel, und
e) gegebenenfalls Katalysatoren, Hilfs- oder Zusatzstoffen, dadurch gekennzeichnet, dass die a) Isocyanat-Prepolymere durch Umsetzung von
   a1) Polyisocyanat,
   a2) niedrig ungesättigten Polyol und
   a3) mindestens einem Kettenverlängerungsmittel (II) erhältlich sind.

## Beschreibung

Die Erfindung betrifft vorzugsweise elastische, zellförmige und/ oder kompakte Polyisocyanat-Polyadditionsprodukte sowie ein Verfahren zu deren Herstellung, wobei ein Prepolymer, erhältlich durch Umsetzung von Isocyanaten mit niedrig ungesättigten Polyolen und Kettenverlängerungsmitteln, Verwendung findet.

Bei der Umsetzung von herkömmlichen Isocyanat-Prepolymeren mit höhermolekularen Polyolen und Kettenverlängerungsmitteln wird oft folgender Effekt beobachtet:

Durch die Umsetzung der Prepolymeren mit dem Kettenverlängerungsmittel entstehen polare Hartphasensegmente, die wegen der im Vergleich zum Polyol höheren Polarität sowie der Aromaten-Aromaten-Wechselwirkungen schnell aggregieren und aus der Reaktionsmischung ausfallen können. Dabei sind diese Hartsegmente oftmals noch nicht mit den Polyolen, die eine Weichphase bilden können, verbunden, so dass ein Netzwerkaufbau nur bedingt erfolgt. Dies hat zur Folge, dass die mechanischen Eigenschaften der resultierenden Produkte, wie beispielsweise Knickzeit, Dauerbiegeverhalten und Entformzeit, negativ beeinflusst werden. Besonders auffällig ist dieser Effekt bei der Verwendung von Ethylenglykol als Kettenverlängerungsmittel, da hier eine hohe Reaktivität und ein gutes Aggregationsverhalten der sich bildenden Hartphasen vorliegt. Darüber hinaus beobachtet man oftmals bei Produkten, dass sich die Haut von der Schaumoberfläche löst.

WO 97/44374 offenbart mikroporöse Polyurethane mit guten physikalischen Eigenschaften, die durch ein Prepolymerverfahren erhalten wurden, wobei das Prepolymer durch Umsetzung von Isocyanat mit einem niedrig ungesättigten Polyoxypropylendiol hergestellt wird.

EP-A-748 828 offenbart ein Verfahren zur Herstellung von PU-Elastomeren mit guten Entformeigenschaften, wobei als Polyolkomponente ein Polyoxypropylen-Polyol mit einer Konzentration von ungesättigten Gruppen von < 0,01 meg/g verwendet wird.

WO 97/23528 beschreibt ein Verfahren zur Herstellung von mikrozellulären Elastomeren, die nach dem Prepolymerverfahren hergestellt werden. Diese Prepolymere werden durch Umsetzung von Isocyanaten mit niedrig ungesättigten Polyolen erhalten.

Der Erfindung lag nun die Aufgabe zugrunde, Polyisocyanat-Polyadditionsprodukte, bevorzugt mikrozelluläre Polyurethan-Elastomere, mit verbesserten mechanischen Eigenschaften, wie beispielsweise gutes Dauerbiegeverhalten, kurze Knickzeit, kurze Entformzeit, gute Weiterreißfestigkeit und gute Kälteflexibilität, und ohne Oberflächenstörungen, wie Hautablöseverhalten, bereitzustellen. Diese vorteilhaften mechanischen Eigenschaften sollen über einen breiten Isocyanat-Index erhalten werden können. Ferner war Aufgabe der Erfindung, ein Verfahren zur Herstellung dieser Polyisocyanat-Polyadditionsprodukte bereitzustellen.

Die Aufgabe konnte dadurch gelöst werden, dass ein Polyisocyanat-Polyadditionsprodukt auf Basis eines Isocyanat-Prepolymeren hergestellt wurde, das durch Umsetzung von Polyisocyanaten mit sowohl niedrig ungesättigten Polyolen als auch mit Kettenverlängerungsmitteln erhältlich ist. Dabei hat sich insbesondere bei mikrozellulären PU-Elastomeren in unerwarteter Weise gezeigt, dass die durch Umsetzung von vorstehenden erfindungsgemäßen Isocyanat-Prepolymeren mit weiteren Kettenverlängerungsmitteln entstehenden Hartphasen langsamer in Reaktionsmischung aggregieren. Die in der Reaktionsmischung sich aufbauenden Hartsegmente können dadurch sowohl längere Hartsegmente aufbauen als auch eine bessere Anbindung zu den langkettigen Polyolen, die die Weichphase ergeben, ausbilden, weil die Reaktionskomponenten länger in der Reaktionslösung vorliegen und sich somit vor Eintreten der Phasenseperation eine effektiv längere Reaktionszeiten ergibt.

Gegenstand der vorliegenden Erfindung ist daher ein Polyisocyanat-Polyadditionsprodukt, erhältlich durch Umsetzung von
a) Isocyanat-Prepolymeren,
b) höhermolekularen Verbindung mit mindestens zwei gegenüber Isocyanatgruppen reaktiven Wasserstoffatomen,
c) mindestens einem Kettenverlängerungsmittel (I),
d) gegebenenfalls Treibmittel, und
e) gegebenenfalls Hilfs- oder Zusatzstoffen,
dadurch gekennzeichnet, dass die a) Isocyanat-Prepolymere durch Umsetzung von
a1) Polyisocyanat,
a2) niedrig ungesättigten Polyol und
a3) mindestens einem Kettenverlängerungsmittel (II) erhältlich sind.

Bevorzugt sind hierbei Kettenverlängerungsmittel (I) und Kettenverlängerungsmittel (II) verschieden.

Ebenfalls ist Gegenstand dieser Erfindung ein Isocyanat-Prepolymer, erhältlich durch Umsetzung von
a1) Polyisocyanat,
a2) niedrig ungesättigten Polyol und
a3) mindestens einem Kettenverlängerungsmittel (II).

Ein weiterer Gegenstand der Erfindung ist ein Verfahren zur Herstellung der erfindungsgemäßen Polyisocyanat-Polyadditionsprodukte durch Umsetzung von
a) Isocyanat-Prepolymeren,
b) höhermolekularen Verbindungen mit mindestens zwei gegenüber Isocyanatgruppen reaktiven Wasserstoffatomen,
c) mindestens einem Kettenverlängerungsmittel (I),
d) gegebenenfalls Treibmittel, und
e) gegebenenfalls Katalysatoren, Hilfs- oder Zusatzstoffen,
dadurch gekennzeichnet, dass die a) Isocyanat-Prepolymere durch Umsetzung von
a1) Polyisocyanat,
a2) niedrig ungesättigten Polyol und
a3) mindestens einem Kettenverlängerungsmittel (II) erhältlich sind.

Schließlich ist Gegenstand der Erfindung die Verwendung der erfindungsgemäßen Polyisocyanat-Polyadditionsprodukte zur Herstellung von Formteilen wie beispielsweise Schuhsohlen. Weiterhin können die Formteile beispielsweise im Automobilbereich für z.B. Armlehnen, Lenkradumschäumung, Kabelbaumumschäumungen, Schaltknöpfe und Spoiler Verwendung finden. Ebenfalls können die Formteile als Dämpfungs-Material verwendet werden.

Die erfindungsgemäßen Polyisocyanat-Polyadditionsprodukte enthalten bevorzugt Urethangruppen. Weiterhin können sie auch Allophanat-, Harnstoff-, Biuret-, Uretdion-, Amid-, Isocyanurat-, Carbodiimid- und/oder Uretonimingruppen enthalten.

Die erfindungsgemäßen Polyisocyanat-Polyadditionsprodukte können kompakt oder zellförmig sein. In einer bevorzugten Ausführungsform handelt es sich bei den Polyisocyanat-Polyadditionsprodukte um mikrozelluläre und/oder kompakte Polyurethan-Elastomere. Besonders bevorzugt sind elastische Polyurethane mit kompakter Oberfläche und zelligem Kern, sogenannte Polyurethan-Weichintegralschaumstoffe.

Die zur Herstellung der Isocyanat-Prepolymere verwendeten a1) Polyisocyanate umfassen die aus dem Stand der Technik bekannten aliphatischen, cycloaliphatischen und aromatischen Isocyanate. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 4,4'-Methylenbis(cyclohexyl)-diisocyanat, Xylylendiisocyanat, Tetramethylxylylendiisocyanat Dodecyldiisocyanat, Lysinalkylester-diisocyanat, wobei Alkyl für C₁ bis C₁₀ steht, 2,2,4- oder 2,4,4-Trimethyl-1,6-hexamethylen-diisocyanat, 1,4-Diisocyanatocyclohexan, 1,3- oder 1,4-Bis(isocyanatomethyl)cyclohexan oder 4-Isocyanatomethyl-1,8-octamethylendiisocyanat.

Ebenfalls können Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-l-methylcyclohexyl-isocyanat, 1,4-Diisocyanato-4-methylpentan, 2,4'-Methylenbis(cyclohexyl)diisocyanat und 4-Methylcyclohexan-1,3-diisocyanat (H-TDI) verwendet werden.

Als Polyisocyanate werden bevorzugt verwendet 4,4'-Diphenylmethandiisocyanat, 1,3- und 1,4-Phenylendiisocyanat, Toluylendiisocyanat, Isophorondiisocyanat (IPDI) und Naphtylendiisocyanat (NDI). Besonders bevorzugt wird 4,4'-MDI verwendet.

Als a1) Polyisocyanate können auch Mischungen der vorstehend genannten Isocyanate verwendet werden.

Unter niedrig ungesättigten Polyolen a2) werden im Rahmen dieser Erfindung insbesondere Polyetheralkohole mit einem Gehalt an ungesättigten Verbindungen von kleiner als 0,02 meg/g, bevorzugt kleiner als 0,01 meg/g, verstanden. Ihre Hydroxylzahl liegt vorzugsweise im Bereich zwischen 20 und 60 mg KOH/g, sie sind zumeist 2 bis 3-funktionell.

Derartige Polyetheralkohole werden zumeist durch Anlagerung von Alkylenoxiden, insbesondere Ethylenoxid, Propylenoxid und Mischungen daraus, an H-funktionelle Startsubstanzen in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Die DMC-Katalysatoren werden zumeist durch Umsetzung eines Metallsalzes mit einer Cyanometallatverbindung hergestellt. Diese Umsetzung kann in Anwesenheit von organischen Liganden durchgeführt werden. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startsubstanzen werden zumeist niedermolekulare Alkohole, vorzugsweise solche mit 2 bis 3 Hydroxylgruppen im Molekül, beispielsweise Glycerin, Ethylenglykol, Propylenglykol und/oder Trimethylolpropan eingesetzt. Häufig werden als Startsubstanzen auch Anlagerungsprodukte von Alkylenoxiden an die genannten Alkohole eingesetzt. Diese haben zumeist ein Molekulargewicht im Bereich von 400 bis 1000 Da.

Die in der vorliegenden Erfindung verwendeten c) Kettenverlängerungsmittel I und a3) Kettenverlängerungsmittel II können sowohl als Kettenverlängerungsmittel aber auch als Vernetzungsmittel fungieren, sie umfassen niedermolekulare, mehrwertige Alkohole, vorzugsweise Diole und/oder Triole, mit Molekulargewichten kleiner als 400 Da, bevorzugt von 60 bis 300 Da, besonders bevorzugt von 60 bis 200 Da. In Betracht kommen beispielsweise aliphatische, cycloaliphatische und/oder araliphatische Diole, wie z.B. Alkandiole mit 2 bis 14, vorzugsweise 2 bis 6 Kohlenstoffatomen und/oder Dialkylenglykole mit 4 bis 8, vorzugsweise 4 bis 6 Kohlenstoffatomen, wie z.B. Ethylenglykol, Propandiol-1,3, Decandiol-1,10, o-, m-, p-Dihydroxycyclohexan, Diethylenglykol, Triethylenglykol, Dipropylenglykol, Tripropylenglykol und vorzugsweise Butandiol-1,3, Butandiol-1,4, Hexandiol-1,6 und Bis-(2-hydroxyethyl)-hydrochinon, Pentandiol-1,5 und Pentandiol-1,3 bzw. Mischungen unterschiedlicher Diole und als mehrwertige Alkohole beispielsweise Triole, wie z.B. 1,2,4-, 1,3,5-Trihydroxycyclohexan, Trimethylolethan, Glycerin und Trimethylolpropan. Bevorzugt verwendet werden Diole und deren Mischungen.

Ferner umfassen c) Kettenverlängerungsmittel I und a3) Kettenverlängerungsmittel II niedermolekulare, mehrwertige Amine, Aminoalkohole oder Thioalkohole mit Molekulargewichten kleiner als 400 Da, vorzugsweise von 60 bis 300 Da, besonders bevorzugt von 60 bis 200 Da. In Betracht kommen beispielsweise Ethylendiamin, N,N-dimethethylendiamin, Toluylendiamin, Isophorondiamin, Cysteamin, Ethanolamin, N-Methylethanolamin, Propanolamin, Isopropanolamin, 2-(Butylamino)ethanol, 2-(Cyclohexylamino)ethanol, 2-Amino-1-butanol, Mercaptoethanol, Mercaptopropanol und Mercaptobutanol.

Ebenfalls können als c) Kettenverlängerungsmittel I und a3) Kettenverlängerungsmittel II Mischungen der vorstehend genannten Verbindungen eingesetzt werden.

In einer bevorzugten Ausführungsform sind c) Kettenverlängerungsmittel I und a3) Kettenverlängerungsmittel II verschieden. Als c) Kettenverlängerungsmittel I wird bevorzugt Ethylenglykol, Butandiol, Propandiol, Pentandiol, Diethylenglykol, Dipropylenglykol, Tripropylenglykol und Hexandiol oder Mischungen aus diesen eingesetzt, als a3) Kettenverlängerungsmittel II wird bevorzugt Diethylenglykol und Dipropylenglykol, Tripropylenglykol, Hexan-, Heptan- Octan-, Nonan- und Decandiol oder Mischungen aus diesen Komponenten eingesetzt.

Die Herstellung der erfindungsgemäß verwendeten a) Isocyanat-Prepolymere erfolgt auf an sich bekannte Weise, indem die a1) Polyisocyanate bei Temperaturen von 0°C bis 120°C, bevorzugt 40°C bis 90°C, mit den a2) niedrig ungesättigten Polyolen und dem a3) mindestens einem Kettenverlängerungsmittel II zum Isocyanat-Prepolymer umgesetzt werden. Um Nebenreaktionen durch Luftsauerstoff auszuschließen, kann das Reaktionsgefäß mit einem Inertgas, vorzugsweise Stickstoff, gespült werden. Das Verhältnis von Isocyanatgruppen zu mit Isocyanat reaktiven Gruppen wird so gewählt, dass der NCO-Gehalt des Prepolymeren im allgemeinen von 1 bis 30 %, bevorzugt von 5 bis 20 % und besonders bevorzugt von 8 bis 16 % beträgt.

Höhermolekulare Verbindungen b) mit mindestens zwei gegenüber Isocyanatgruppen reaktiven H-Atomen sind vorzugsweise Polyetherpolyole. Sie werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole in Betracht, wie Ethylenglykol, Propandiol-1,2 und -1,3, Diethylenglykol, Dipropylenglykol, Butandiol-1,4, Glycerin, Trimethylolpropan usw. Die Polyetherpolyole, vorzugsweise Polyoxypropylen-polyoxyethylen-polyole, besitzen eine Funktionalität von 2 bis 3 und Molekulargewichte von 1.000 bis 8.000, vorzugsweise 2.000 bis 7.000.

Als Polyetherole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, hergestellt werden.

Weiterhin geeignet sind Polyesterpolyole. Diese können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure. Ebenfalls können Mischsysteme, die sowohl Polyesterole als auch Polyetherole enthalten, verwendet werden.

In einer besonders bevorzugten Ausführungsform werden als b) höhermolekulare Verbindungen mit mindestens zwei gegenüber Isocyanat reaktiven Wassserstoffatomen niedrig ungesättigte Polyole verwendet, wie sie vorstehend bei Komponente a2) beschrieben wurden, wobei diese Polyetherole insbesondere mit einem Ethylenoxid-endblock von mindestens 10 % Ethylenoxid versehen wurden.

Für die Herstellung von zellförmigen Polyisocyanat-Polyadditionsprodukten ist der Einsatz von d) Treibmitteln notwendig. Als Treibmittel (d) findet vorzugsweise Wasser Verwendung. Da die Komponenten (b) und gegebenenfalls (c) aufgrund der Herstellung und/oder chemischen Zusammensetzung Wasser aufweisen können, bedarf es in manchen Fällen keiner separaten Wasserzugabe zu den Aufbaukomponenten (b) und (c) oder der Reaktionsmischung. Sofern der Polyurethan-Formulierung zur Erzielung des gewünschten Raumgewichts zusätzlich Wasser zugesetzt werden muß, wird dieses üblicherweise in Mengen von 0,05 bis 4,0 Gew.-%, vorzugsweise von 0,1 bis 3,0 Gew.-% und insbesondere von 0,3 bis 2,5 Gew.-%, bezogen auf das Gewicht der Komponenten (a) bis (c), verwendet.

Als Treibmittel (d) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C, besitzen oder Gase eingesetzt werden. Von den als Treibmittel (d) geeigneten, bezüglich NCO-Gruppen inerten Flüssigkeiten werden vorzugsweise Alkane, Cycloalkane oder Mischungen mit einem Siedepunkt von -40 bis 50°C unter Atmosphärendruck aus Alkanen und Cycloalkanen verwendet.

Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan und Gase, wie z.B. Stickstoff, Kohlenmonoxid und Edelgase wie z.B. Helium, Neon und Krypton.

Als Treibmittel geeignet sind ferner Salze, die sich thermisch zersetzen, wie z.B. Ammoniumbicarbonat und/oder Ammoniumcarbamat oder Verbindungen, die in situ solche Salze bilden, wie z.B. wäßriger Ammoniak und/oder Amine und Kohlendioxid, und Ammoniumsalze organischer Carbonsäuren, wie z.B. die Monoammoniumsalze der Malonsäure, Borsäure, Ameisensäure oder Essigsäure. Ebenfalls können HFC-245fa® (Fa. Honeywell) und HFC365mfc® (Fa. Solvay) verwendet werden.

Gegebenenfalls können den erfindungsgemäßen Polyisocyanat-Polyadditionsprodukte e) Katalysatoren, Hilfs- und Zusatzstoffe zugesetzt werden. Als Katalysatoren werden insbesondere Verbindungen verwendet, die die Reaktion der gegenüber Isocyanat reaktiven Gruppen der Verbindungen der Komponenten b) und c) mit den Isocyanat-Prepolymeren a) stark beschleunigen. In Betracht kommen beispielsweise organische Amine, wie Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen in den Mischungen enthalten sein, besonders bevorzugt Triethylendiamin. Im allgemeinen verwendet man 0,001 bis 3 Gew.-%, bevorzugt 0,01 bis 2 Gew.-% Katalysator bezogen auf das Gewicht der Komponenten (a) bis (c) eingesetzt.

Als Hilfsmittel und/oder Zusatzstoffe seien beispielsweise oberflächenaktive Substanzen, Schaumstabilisatoren, Zellregler, äußere und innere Trennmittel, Füll- und Verstärkungsstoffe, wie beispielsweise Glasfasern, Farbstoffe, Pigmente, Flammschutzmittel, Hydrolysenschutzmittel, fungistatisch und bakteriostatisch wirkende Substanzen genannt.

Weitere Angaben über die verwendeten Ausgangsstoffe finden sich beispielsweise im Kunststoffhandbuch, Band 7, "Polyurethane", herausgegeben von Günter Oertel, Carl-Hanser-Verlag, München, 3. Auflage, 1993.

Zur Herstellung der Formkörper werden die Isocyanat-Prepolymere a), höhermolekulare Verbindungen mit mindestens zwei gegenüber Isocyanat reaktiven Wasserstoffatomen b) und Kettenverlängerer c) in solchen Mengen zur Umsetzung gebracht, dass das Äquivalenzverhältnis von NCO-Gruppen der Isocyanat-Prepolymere a) zur Summe der reaktiven Wasserstoffatome der Komponenten b) und c) 1 : 0,8 bis 1 : 1,45 (entsprechend einem Isocyanat-Index von 80 bis 145), vorzugsweise 1 : 0,8 bis 1 : 1,25 und besonders bevorzugt von 1 : 0,9 bis 1 : 1,15 beträgt.

Aufgrund des niedrigen NCO-Gehaltes der Isocyanat-Prepolymere ist dabei das Gewichtsverhältnis der Komponente a) zur Summe der Komponenten b bis e) üblicherweise größer als 1.

Die erfindungsgemäßen Polyisocyanat-Polyadditionsprodukte können als Formkörper Verwendung finden. Bevorzugt sind Formkörper von Integralschaumtyp. Die Formkörper werden im allgemeinen nach dem one-shot-Verfahren mit Hilfe der Niederdruck- oder Hochdrucktechnik in bevorzugt geschlossenen Formwerkzeugen hergestellt.

Die Erfindung stellt Polyisocyanat-Polyadditionsprodukte, bevorzugt geschäumte Elastomere Polyisocyanat-Polyadditionsprodukte auf Polyurethanbasis, bereit, die vorteilhafte physikalische und mechanische Eigenschaften, wie beispielsweise gute Zugfestigkeit, gutes Dauerbiegeverhalten, Weiterreißfestigkeit, gute Sticherweiterung, geringes Hautablöseverhalten und/oder gutes Dauerbiegeverhalten über einen breiten Indexbereich zeigen. Ferner zeigen die erfindungsgemäßen Polyisocyanat-Polyadditionsprodukte kurze Entformzeiten bei gleichzeitig guten Dauergebrauchseigenschaften.

Die vorliegende Erfindung soll anhand der nachfolgenden Beispiele veranschaulicht werden.

### Beispiel 1 bis 6

Es wird ein erfindungsgemäßes Isocyanat-Prepolymer hergestellt und mit einer Mischung aus den Komponenten b) bis e) (A-Komponente) bei unterschiedlichem Index zu erfindungsgemäßen Polyisocyanat-Polyadditionsprodukte umgesetzt. (Beispiele 1 bis 6).

Tabelle 1 zeigt die mechanischen Eigenschaften der resultierenden Produkte. Alle Teil-Angaben beziehen sich auf Gewichtsteile.

### Isocyanat-Prepolymer a) auf Basis:

- 53: Teile 4,4'-MDI
- 44: Teile eines Polyoxypropylendiols, auf Basis von Dipropylenglykol mit einer OH-Zahl von 52 und einer Konzentration von ungesättigten Gruppen die kleiner ist als 0,02 meg/g
- 2: Teile Dipropylenglykol
- 1: Teil Diethylenglykol
NCO-Gehalt 14 %.

### A-Komponente:

- 40: Teile eines Polyoxyproylen-polyoxyethylendiols, hergestellt durch DMC-Katalyse auf Basis von Dipropylenglykol, mit der OH-Zahl 29 und einem EO-Block von 19 %
- 48: Teile eines Polyoxyproylen-polyoxyethylentriols, hergestellt durch DMC-Katalyse auf Basis von Trimethylolpropan mit der OH-Zahl 29 und einem EO-Block von 21 %
- 8: Teile Ethylenglykol
- 0,8: Teile Wasser
- 0,5: Teile Tevostab ® B8418 und
- 2,7: Teile einer Mischung aus Dabco und Niax A-1®

**Tabelle 1:**

| Eigenschaften der Polyisocyanat-Polyadditionsprodukte gemäß Bsp. 1 - 6 | | | | | | |
|---|---|---|---|---|---|---|
| Beispiel | 1 | 2 | 3 | 4 | 5 | 6 |
| Index | 94,6 | 96,2 | 97,8 | 99,3 | 101,2 | 103,3 |
| Dichte PPL [kg/m³] | 550 | 550 | 550 | 550 | 550 | 550 |
| Wachstum [%] | 62 | 63 | 63 | 65 | 66 | 66 |
| Zugfestigkeit [MPa] | 3,2 | 3,8 | 4,5 | 4,6 | 4,8 | 4,7 |
| Dehnung [%] | 451 | 485 | 504 | 495 | 505 | 490 |
| Weiterreißfestigkeit [N/mm] | 8,3 | 8,5 | 8,1 | 8,3 | 8,7 | 8,3 |
| Sticherweiterung 100.000 Biegungen Raumtemperatur (RT) | 1 | 1 | 1 | 1 | 2 | 3 |
| | 2 | 2 | 1 | 2 | 1 | 3 |
| | 1 | 2 | 1 | 1 | 1 | 4 |
| | 2 | 1 | 1 | 1 | 2 | 3 |
| | 4 | 3 | 1 | 1 | 2 | 4 |
| Sticherweiterung 100.000 Biegungen -15°C | 3 | 2 | 2 | 2 | 3 | 4 |
| | 3 | 2 | 2 | 2 | 3 | 5 |
| | 3 | 2 | 2 | 3 | 2 | 7 |
| | 4 | 1 | 2 | 2 | 3 | 6 |

Die Knickzeiten für diese System liegen zwischen 3,5 und 6 Minuten.

Die Weiterreißfestigkeit und die Sticherweiterung bei 100.000 Biegungen (Dauerbiegeprüfung) wurden nach DIN 53 507 bzw. DIN 53 543 durchgeführt.

### Vergleichsbeispiel 7 bis 12

Vergleichsbeispiele 7 bis 12 wurden mit einem Isocyanat-Prepolymer des Standes der Technik, d.h. ohne Kettenverlängerungsmittel (II), durchgeführt. Tabelle 2 zeigt die mechanischen Eigenschaften der resultierenden Produkte.

### Isocyanat-Prepolymer auf Basis

- 53: Teile 4,4'-MDI
- 47: Teile eines Polyoxypropylendiols auf Basis von Dipropylenglykol mit einer OH-Zahl von 52 und einer Konzentration von ungesättigten Gruppen die kleiner ist als 0,02 meg/g
NCO-Gehalt 14 %

### A-Komponente

- 40: Teile eines Polyoxyproylen-polyoxyethylendiols, hergestellt durch DMC-Katalyse auf Basis von Dipropylenglykol ,mit der OH-Zahl 29 und einem EO-Block von 19 %
- 48: Teile eines Polyoxyproylen-polyoxyethylentriols, hergestellt durch DMC-Katalyse auf Basis von Trimethylolpropan mit der OH-Zahl 29 und einem EO-Block von 21 %
- 8: Teile Ethylenglykol als Kettenverlängerer
- 0,8: Teile Wasser
- 0,5: Teile Tevostab® B8418 und
- 2,7: Teile einer Mischung aus Dabco und Niax A-1

**Tabelle 2:**

| Eigenschaften der Produkte gemäß Vergleichsbeispiel 7 - 12 | | | | | | |
|---|---|---|---|---|---|---|
| Vergleichsbeispiel | 7 | 8 | 9 | 10 | 11 | 12 |
| Index | 94,6 | 96,2 | 97,8 | 99,3 | 101,1 | 103,3 |
| Dichte PPL [kg/m³] | 550 | 550 | 550 | 550 | 550 | 550 |
| Wachstum [%] | 61 | 63 | 63 | 65 | 65 | 66 |
| Zugfestigkeit [MPa] | 2,2 | 2,4 | 2,5 | 3,0 | 2,7 | 2,0 |
| Dehnung [%] | 370 | 423 | 434 | 495 | 460 | 355 |
| Weiterreißfestigkeit [N/mm] | 4,7 | 4,7 | 5,1 | 5,8 | 4,8 | 4,2 |
| Sticherweiterung 100.000 Biegungen RT | Bruch | Bruch | 5 | 2 | 3 | Bruch |
| | | | 5 | 2 | 4 | |
| | | | 4 | 3 | 4 | |
| | | | 5 | 2 | 5 | |
| | | | 5 | 3 | 3 | |
| Sticherweiterung 100.000 Biegungen - 15°C | Bruch | Bruch | 4 | 2 | 3 | Bruch |
| | | | 5 | 3 | 6 | |
| | | | 3 | 2 | 4 | |
| | | | 5 | 2 | 5 | |

Entformzeit 3 Minuten - Knickzeit zwischen 6 und 9 Minuten.

Knickzeit: Zeit bis nach dem Entformen der Sohle beim Biegen um 180° kein Brechen der Sohlen bzw. des Formkörpers mehr zu beobachten ist.

Aus den Daten von Tabellen 1 und 2 ist ersichtlich, daß die erfindungsgemäßen Polyisocyanat-Polyadditionsprodukte der Beispiele 1 bis 6 im Hinblick auf Zugfestigkeit, Dehnung, Weiterreißfestigkeit und Sticherweiterung deutlich bessere Werte aufzeigen als die Produkte nach dem Stand der Technik (Vergleichsbeispiele 7 bis 12).

Ferner zeigt sich, dass die auf den erfindungsgemäßen Polyisocyanat-Polyadditionsprodukten, basierenden Formulierungen (Beispiel 1 bis 6) optisch einwandfrei sind und keine Materialfehler wie Oberflächenstörungen, Blasen etc. (Hautablöser) aufweisen, während die PUR-Schäume der Vergleichsbeispiele 7 bis 12 viele Hautablöser aufweisen.

## Patentansprüche

1. Polyisocyanat-Polyadditionsprodukte, erhältlich durch Umsetzung von
a) Isocyanat-Prepolymeren,
b) höhermolekularen Verbindung mit mindestens zwei gegenüber Isocyanatgruppen reaktiven Wasserstoffatomen,
c) mindestens einem Kettenverlängerungsmittel (I),
d) gegebenenfalls Treibmittel, und
e) gegebenenfalls Katalysatoren, Hilfs- oder Zusatzstoffen,
**dadurch gekennzeichnet, dass** die a) Isocyanat-Prepolymere durch Umsetzung von
a1) Polyisocyanat,
a2) niedrig ungesättigten Polyol und
a3) mindestens einem Kettenverlängerungsmittel (II) erhältlich sind.

2. Polyisocyanat-Polyadditionsprodukte nach Anspruch 1, **dadurch gekennzeichnet, dass** Kettenverlängerungsmittel (I) und Kettenverlängerungsmittel (II) verschieden sind.

3. Polyisocyanat-Polyadditionsprodukte nach Anspruch 1 oder 2, **dadurch gekennzeichnet, dass** als Kettenverlängerungsmittel II Diethylenglykol und/oder Dipropylenglykol und/oder Tripropylenglykol, und oder Alkylendiole mit mehr als 5 C-Atomen verwendet werden.

4. Polyisocyanat-Polyadditionsprodukte nach einem der Ansprüche 1 bis 3, **dadurch gekennzeichnet, dass** als niedrig ungesättigte Polyole Polyetheralkohole mit einem Gehalt an ungesättigten Verbindungen von kleiner als 0,02 meg/g, eingesetzt werden.

5. Polyisocyanat-Polyadditionsprodukte nach einem der Ansprüche 1 bis 3, **dadurch gekennzeichnet, dass** die Umsetzung bei einem Isocyanat-Index von 90 bis 115 erfolgt.

6. Verwendung der Polyadditionsprodukte nach einem der Ansprüche 1 bis 5 zur Herstellung von Formkörpern.

7. Isocyanat-Prepolymer, erhältlich durch Umsetzung von
a1) Polyisocyanat,
a2) niedrig ungesättigtem Polyol und
a3) mindestens einem Kettenverlängerungsmittel (II).

8. Verfahren zur Herstellung von Polyisocyanat-Polyadditionsprodukten durch Umsetzung von
a) Isocyanat-Prepolymeren,
b) höhermolekularen Verbindungen mit mindestens zwei gegenüber Isocyanatgruppen reaktiven Wasserstoffatomen,
c) mindestens einem Kettenverlängerungsmittel (I),
d) gegebenenfalls Treibmittel, und
e) gegebenenfalls Katalysatoren, Hilfs- oder Zusatzstoffen,
**dadurch gekennzeichnet, dass** die a) Isocyanat-Prepolymere durch Umsetzung von
a1) Polyisocyanat,
a2) niedrig ungesättigtem Polyol und
a3) mindestens einem Kettenverlängerungsmittel (II) erhältlich sind.
